# EUROPÄISCHE PATENTSCHRIFT

(11) **EP 4 211 369 B1**
(45) Veröffentlichungstag und Bekanntmachung des Hinweises auf die Patenterteilung: **01.01.2025**
(21) Anmeldenummer: 21762006.1
(22) Anmeldetag: 10.08.2021
(51) Int. Cl.: F16H 59/68, F16H 59/04, F16H 61/12

(54) **VERFAHREN UND VORRICHTUNG ZUR ÜBERPRÜFUNG UND ZUR ANPASSUNG DER STELLUNG DES SCHALTHEBELS EINES GETRIEBES EINES FAHRZEUGS**
METHOD AND DEVICE FOR CHECKING AND ADAPTING THE POSITION OF THE GEARSHIFT LEVER OF A GEARBOX OF A VEHICLE
PROCÉDÉ ET DISPOSITIF DE CONTRÔLE ET D'ADAPTATION DE LA POSITION DU LEVIER DE CHANGEMENT DE VITESSE D'UNE BOÎTE DE VITESSES D'UN VÉHICULE

(30) Priorität: 08.09.2020 DE 102020123343
(43) Veröffentlichungstag der Anmeldung: 19.07.2023
(73) Patentinhaber: Bayerische Motoren Werke Aktiengesellschaft, 80809 München (DE)
(72) Erfinder: PFLEGER, Franz, 84036 Landshut (DE)
(86) Internationale Anmeldenummer: PCT/EP2021/072209
(87) Internationale Veröffentlichungsnummer: WO 2022/053242

(56) Entgegenhaltungen:
- DE-A1- 102006 026 951
- DE-A1- 102010 033 244
- DE-A1- 102010 033 244
- DE-A1- 102011 076 388
- DE-A1- 102011 076 388
- DE-A1- 102011 086 243
- DE-A1- 102011 086 243
- DE-A1- 102015 114 338
- DE-A1- 19 731 842
- DE-A1- 19 731 842

## Beschreibung

Die Erfindung betrifft ein Verfahren und eine entsprechende Vorrichtung zur Überprüfung und zur Anpassung der Stellung des Schalthebels eines Schaltgetriebes eines Fahrzeugs, insbesondere eines Motorrads, sowie ein Fahrzeug mit einer solchen Vorrichtung.

Ein Fahrzeug, insbesondere ein einspuriges Fahrzeug, wie z.B. ein Motorrad, kann einen Schalthebel aufweisen, der ausgebildet ist, mit dem Fuß des Fahrers des Fahrzeugs betätigt zu werden, um den Gang eines Getriebes des Fahrzeugs zu verändern. Der Schalthebel kann dabei mit dem Fuß in eine erste Richtung (etwa nach Oben) ausgelenkt werden, um den eingestellten Gang zu erhöhen, und/oder der Schalthebel kann mit dem Fuß in eine entgegengesetzte zweite Richtung (etwa nach Unten) ausgelenkt werden, um den eingestellten Gang zu reduzieren.

Das Hoch- bzw. Herunterschalten über den Schalthebel eines Fahrzeugs kann für unterschiedliche Fahrer als unterschiedlich komfortabel empfunden werden. Ferner kann das Hoch- bzw. Herunterschalten über den Schalthebel für unterschiedliche Fahrer unterschiedlich zuverlässig sein.

DE 10 2010 033 244 A1 beschreibt ein Verfahren zum Anzeigen von Versatzfehlern in einem Fahrzeuggetriebe. In dem beschriebenen Verfahren wird die Leerlaufstellung eines Ganghebels berechnet. Ferner wird überprüft und ggf. angezeigt, dass eine Korrektur des Versatzes der Leerlaufstellung erwünscht ist.

Das vorliegende Dokument befasst sich mit der technischen Aufgabe, für unterschiedliche Fahrer eines Fahrzeugs jeweils einen hohen Komfort und eine hohe Zuverlässigkeit von Hoch- und Rückschaltvorgängen über einen Fußschalthebel des Fahrzeugs zu ermöglichen.

Die Aufgabe wird jeweils durch die einzelnen unabhängigen Ansprüche gelöst. Vorteilhafte Ausführungsformen werden u.a. in den abhängigen Ansprüchen beschrieben.

Gemäß einem Aspekt wird eine Vorrichtung zur Überprüfung und zur Anpassung der Stellung des Schalthebels für ein (Schalt-) Getriebe eines Fahrzeugs, insbesondere eines Motorrads, beschrieben. Der Schalthebel ist ausgebildet, mit dem Fuß des Fahrers des Fahrzeugs in eine erste Richtung (z.B. nach Oben) oder in eine (entgegengesetzte) zweite Richtung (z.B. nach Unten) ausgelenkt zu werden.

Des Weiteren kann der Schalthebel ausgebildet sein, insbesondere über ein Gestänge, eine Auslenkung des Schalthebels in die erste Richtung in eine Drehung der Schaltwelle des Getriebes in eine erste (Dreh-) Richtung (z.B. in eine Drehung gegen den Uhrzeigersinn) zu übertragen, und/oder eine Auslenkung des Schalthebels in die entgegengesetzte zweite Richtung in eine Drehung der Schaltwelle des Getriebes in eine entgegengesetzte zweite (Dreh-) Richtung (z.B. in eine Drehung im Uhrzeigersinn) zu übertragen.

Die Stellung des Schalthebels, insbesondere die Stellung des Bolzens, über den der Fahrer des Fahrzeugs auf den Schalthebel einwirken kann, kann ggf. über eine Stellschraube und/oder automatisch mittels eines Aktors (z.B. mittels eines Elektromotors) einstellbar sein. Dabei kann die Neutralstellung des Schalthebels, insbesondere des Bolzens, in die erste Richtung oder in die zweite Richtung verschoben werden. Durch Verschieben der Neutralstellung des Schalthebels in die erste Richtung kann z.B. die durch den Fahrer bewirkte Länge des Schaltweges der Schaltwelle des Getriebes für einen Hochschaltvorgang verkürzt und für einen Rückschaltvorgang verlängert werden. In entsprechender Weise kann durch Verschieben der Neutralstellung des Schalthebels in die zweite Richtung typischerweise die durch den Fahrer bewirkte Länge des Schaltweges der Schaltwelle des Getriebes für einen Hochschaltvorgang verlängert und für einen Rückschaltvorgang verkürzt werden.

Die Vorrichtung ist eingerichtet, erste Sensordaten in Bezug auf die Länge des Schaltweges der Schaltwelle des Getriebes bei zumindest einem Hochschaltvorgang zu ermitteln, der durch Auslenkung des Schalthebels durch den Fahrer des Fahrzeugs in die erste Richtung bewirkt wird. Insbesondere kann die Vorrichtung eingerichtet sein, erste Sensordaten für eine Vielzahl von Hochschaltvorgängen zu ermitteln.

Des Weiteren ist die Vorrichtung eingerichtet, zweite Sensordaten in Bezug auf die Länge des Schaltweges der Schaltwelle des Getriebes bei zumindest einem Rückschaltvorgang zu ermitteln, der durch Auslenkung des Schalthebels durch den Fahrer in die zweite Richtung bewirkt wird. Insbesondere kann die Vorrichtung eingerichtet sein, zweite Sensordaten für eine Vielzahl von Rückschaltvorgängen zu ermitteln.

Die Schaltwelle kann einen Magneten aufweisen, der ausgebildet ist, sich zusammen mit der Schaltwelle um die Drehachse der Schaltwelle zu drehen. Die Vorrichtung kann eingerichtet sein, die ersten und die zweiten Sensordaten mittels eines Sensors, insbesondere mittels eines Hall-Sensors, zu ermitteln, der eingerichtet ist, Sensordaten in Bezug auf das von dem Magneten bewirkte Magnetfeld, insbesondere in Bezug auf die Feldstärke des Magnetfeldes, zu erfassen.

Die Vorrichtung ist ferner eingerichtet, die Stellung des Schalthebels, insbesondere die Eignung der Stellung des Schalthebels für den Fahrer, auf Basis der ersten Sensordaten und auf Basis der zweiten Sensordaten zu überprüfen.

Insbesondere kann die Vorrichtung eingerichtet sein, auf Basis der ersten Sensordaten und auf Basis der zweiten Sensordaten eine statistische Auswertung, insbesondere eine Häufigkeitsverteilung, der Länge des Schaltweges der Schaltwelle des Getriebes bei der Vielzahl von Hochschaltvorgängen und bei der Vielzahl von Rückschaltvorgängen zu ermitteln. Die Stellung des Schalthebels, insbesondere die Eignung der Stellung des Schalthebels, kann dann auf Basis der statistischen Auswertung, insbesondere auf Basis der Häufigkeitsverteilung, überprüft werden.

Die Vorrichtung ermöglicht es somit, in präziser Weise für einen bestimmten Fahrer des Fahrzeugs zu überprüfen, ob die Stellung des Schalthebels für den Fahrer geeignet ist, insbesondere ob die Stellung des Schalthebels zu dem Fuß und/oder zu dem Schuh des Fahrers passt. So können der Komfort und die Zuverlässigkeit von Schaltvorgängen für den bestimmten Fahrer des Fahrzeugs erhöht werden. Insbesondere kann so eine spezifische Stellung des Schalthebels für den jeweiligen Fahrer des Fahrzeugs ermittelt und ggf. eingestellt werden. Die Vorrichtung ist eingerichtet, in Abhängigkeit von den ersten Sensordaten und den zweiten Sensordaten zu veranlassen, dass die Stellung des Schalthebels angepasst wird, wobei die Stellung des Schalthebels eine Neutralstellung ist.

Insbesondere kann eine Anpassung der Stellung des Schalthebels veranlasst werden, wenn erkannt wird, dass die Stellung des Schalthebels nicht für den Fahrer des Fahrzeugs geeignet ist und/oder nicht zu dem Fahrer passt.

Das Anpassen der Stellung des Schalthebels umfasst gemäß der vorliegenden Erfindung das Verschieben der Neutralstellung des Schalthebels in die erste Richtung, um die durch den Fahrer bewirkte Länge des Schaltweges der Schaltwelle des Getriebes für einen Hochschaltvorgang zu verkürzen und für einen Rückschaltvorgang zu verlängern; oder das Verschieben der Neutralstellung des Schalthebels in die zweite Richtung, um die durch den Fahrer bewirkte Länge des Schaltweges der Schaltwelle des Getriebes für einen Hochschaltvorgang zu verlängern und für einen Rückschaltvorgang zu verkürzen.

Des Weiteren kann die Vorrichtung eingerichtet sein, auf Basis der ersten Sensordaten und auf Basis der zweiten Sensordaten eine Ziel-Stellung des Schalthebels zu ermitteln (die für den Fahrer des Fahrzeugs geeignet ist). Die Vorrichtung kann ferner eingerichtet sein, zu veranlassen, dass die Stellung des Schalthebels in Abhängigkeit von der ermittelten Ziel-Stellung angepasst wird.

Das Veranlassen der Änderung der Stellung des Schalthebels und/oder das Einstellen der Stellung des Schalthebels auf die Ziel-Stellung können z.B. veranlasst werden: Durch Ausgabe eines Hinweises an den Fahrer des Fahrzeugs (z.B. über eine Benutzerschnittstelle des Fahrzeugs); und/oder durch Eintrag eines Hinweises in einen Fehlerspeicher des Fahrzeugs (um zu veranlassen, dass die Stellung des Schalthebels durch den Wartungsdienst des Fahrzeugs angepasst wird); und/oder durch Ansteuern eines Aktors (z.B. eines Elektromotors) des Fahrzeugs, der eingerichtet ist, die Stellung des Schalthebels automatisch zu verändern.

Durch die (ggf. automatische) Anpassung der Stellung des Schalthebels können der Komfort und die Zuverlässigkeit von Schaltvorgängen, die durch einen bestimmten Fahrer des Fahrzeugs bewirkt werden, erhöht werden.

Die Vorrichtung kann eingerichtet sein, auf Basis der ersten Sensordaten eine minimale, eine mittlere und/oder eine maximale (erste) Länge des Schaltweges bei der Vielzahl von Hochschaltvorgängen zu ermitteln. In entsprechender Weise kann die Vorrichtung eingerichtet sein, auf Basis der zweite Sensordaten eine minimale, eine mittlere und/oder eine maximale (zweite) Länge des Schaltweges bei der Vielzahl von Rückschaltvorgängen zu ermitteln. Dabei kann jeweils der Betrag der Längen der jeweiligen Schaltwege ermittelt werden.

Die minimale, mittlere und/oder maximale erste Länge des Schaltweges (für die Hochschaltvorgänge) können dann mit der minimalen, mittleren und/oder maximalen zweiten Länge des Schaltweges (für die Rückschaltvorgänge) verglichen werden, um die Stellung des Schalthebels, insbesondere um die Eignung der Stellung des Schalthebels für den Fahrer, zu überprüfen. Dabei kann eine Abweichung zwischen der ersten Länge und der entsprechenden zweiten Länge, die über einem vordefinierten Abweichungs-Schwellenwert liegt, ein Hinweis darauf sein, dass die Stellung des Schalthebels nicht für den Fahrer des Fahrzeugs geeignet ist. Durch den Vergleich der Länge der Schaltwege bei Hochschaltvorgängen und der Länge der Schaltwege bei Rückschaltvorgängen kann die Stellung des Schalthebels in besonders präziser Weise überprüft werden.

Die Vorrichtung kann eingerichtet sein, die minimale, mittlere und/oder maximale erste Länge des Schaltweges mit einem Längen-Schwellenwert zu vergleichen. Dabei kann der Längen-Schwellenwert von der Minimallänge des Schaltweges der Schaltwelle des Getriebes abhängen (bzw. der Minimallänge entsprechen), die für einen erfolgreichen Schaltvorgang mindestens erforderlich ist. In entsprechender Weise kann die Vorrichtung eingerichtet sein, die minimale, mittlere und/oder maximale zweite Länge des Schaltweges mit dem Längen-Schwellenwert zu vergleichen. Die Stellung des Schalthebels kann dann in besonders präziser Weise auf Basis der Vergleiche überprüft werden. Insbesondere kann durch die Vergleiche mit dem Längen-Schwellenwert in präziser Weise erkannt werden, ob es die Stellung des Schalthebels dem Fahrer ermöglicht, zuverlässige und/oder komfortable Hoch- bzw. Rückschaltvorgänge durchzuführen.

Die Vorrichtung kann eingerichtet sein, die Ziel-Stellung zu ermitteln, um zu bewirken, dass für eine Vielzahl von zukünftigen Schaltvorgängen eine für die Vielzahl von zukünftigen Schaltvorgängen ermittelte Häufigkeitsverteilung der Längen der Schaltwege einen höheren Grad an Symmetrie aufweist als die auf Basis der ersten und zweiten Sensordaten ermittelte Häufigkeitsverteilung. Zu diesem Zweck kann die Neutrallage des Schalthebels in die erste Richtung verschoben werden, wenn die Häufigkeitsverteilung anzeigt, dass die ersten Längen der Schaltwege für Hochschaltvorgänge größer sind als die zweiten Längen der Schaltwege für Rückschaltvorgänge. Alternativ kann die Neutrallage des Schalthebels in die zweite Richtung verschoben werden, wenn die Häufigkeitsverteilung anzeigt, dass die ersten Längen der Schaltwege für Hochschaltvorgänge kleiner sind als die zweiten Längen der Schaltwege für Rückschaltvorgänge.

Die Anpassung der Stellung des Schalthebels kann somit darauf ausgerichtet sein, eine möglichst symmetrische Häufigkeitsverteilung der Längen der Schaltwege für Hochschaltvorgänge und für Rückschaltvorgänge zu bewirken.

Alternativ oder ergänzend kann die Vorrichtung eingerichtet sein, die Ziel-Stellung zu ermitteln, um zu bewirken, dass für eine Vielzahl von zukünftigen Schaltvorgängen die Abweichung der mittleren zweiten Länge von der mittleren ersten Länge, die für die Vielzahl von zukünftigen Schaltvorgängen ermittelt werden, geringer ist als die Abweichung der mittleren zweiten Länge von der mittleren ersten Länge, die auf Basis der ersten und zweiten Sensordaten ermittelt wurden. Eine erhöhte Symmetrie der Häufigkeitsverteilung der Längen der Schaltwege kann somit z.B. durch eine Angleichung der mittleren Länge der Schaltwege für Hochschaltvorgänge und für Rückschaltvorgänge bewirkt werden. Dies kann durch ein Verschieben der Neurallage des Schalthebels in die erste Richtung oder in die zweite Richtung bewirkt werden (wie oben dargelegt).

Durch eine Angleichung der Längen der Schaltwege für Hochschaltvorgänge und für Rückschaltvorgänge können der Komfort und die Zuverlässigkeit von Schaltvorgängen für einen spezifischen Fahrer des Fahrzeugs in besonders präziser Weise erhöht werden.

Gemäß einem weiteren Aspekt wird ein (Straßen-) Kraftfahrzeug (insbesondere ein Motorrad) beschrieben, das die in diesem Dokument beschriebene Vorrichtung umfasst.

Gemäß einem weiteren Aspekt wird ein Verfahren zur Überprüfung und zur Anpassung der Stellung eines Schalthebels für ein Getriebe eines Fahrzeugs beschrieben. Der Schalthebel ist ausgebildet, mit dem Fuß des Fahrers des Fahrzeugs in eine erste Richtung oder in eine entgegengesetzte zweite Richtung ausgelenkt zu werden. Das Verfahren umfasst das Ermitteln von ersten Sensordaten in Bezug auf die Länge des Schaltweges der Schaltwelle des Getriebes bei zumindest einem Hochschaltvorgang, der durch Auslenkung des Schalthebels durch den Fahrer des Fahrzeugs in eine erste Richtung bewirkt wird. Das Verfahren umfasst ferner das Ermitteln von zweiten Sensordaten in Bezug auf die Länge des Schaltweges der Schaltwelle des Getriebes bei zumindest einem Rückschaltvorgang, der durch Auslenkung des Schalthebels durch den Fahrer in eine zweite Richtung bewirkt wird. Das Verfahren umfasst ferner das Überprüfen der Stellung des Schalthebels, insbesondere das Überprüfen der Eignung der Stellung des Schalthebels für den Fahrer, auf Basis der ersten Sensordaten und auf Basis der zweiten Sensordaten.

Das Verfahren umfasst ferner das Veranlassen, in Abhängigkeit von den ersten Sensordaten und den zweiten Sensordaten, dass die Stellung des Schalthebels angepasst wird, wobei die Stellung des Schalthebels die Neutralstellung ist. Das Anpassen der Stellung des Schalthebels umfasst: ein Verschieben der Neutralstellung des Schalthebels in die erste Richtung, um die durch den Fahrer bewirkte Länge des Schaltweges der Schaltwelle des Getriebes für einen Hochschaltvorgang zu verkürzen und für einen Rückschaltvorgang zu verlängern; oder ein Verschieben der Neutralstellung des Schalthebels in die zweite Richtung, um die durch den Fahrer bewirkte Länge des Schaltweges der Schaltwelle des Getriebes für einen Hochschaltvorgang zu verlängern und für einen Rückschaltvorgang zu verkürzen.

Gemäß einem weiteren Aspekt wird ein Software (SW) Programm, das nicht Bestandteil der vorliegenden Erfindung ist, beschrieben.

Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium, das nicht Bestandteil der vorliegenden Erfindung ist, beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Im Weiteren wird die Erfindung anhand von Ausführungsbeispielen näher beschrieben. Dabei zeigen
Figur 1 ein beispielhaftes einspuriges Fahrzeug in einer Seitenansicht;
Figur 2a einen beispielhaften Schalthebel in einer Seitenansicht;
Figur 2b eine Schaltwelle mit einem Schaltweg-Sensor;
Figur 3 beispielhafte statistische Daten in Bezug auf die Schaltwege bei einer Vielzahl von Schaltvorgängen; und
Figur 4 ein Ablaufdiagramm eines beispielhaften Verfahrens zur Überprüfung der Stellung eines Fußschalthebels.

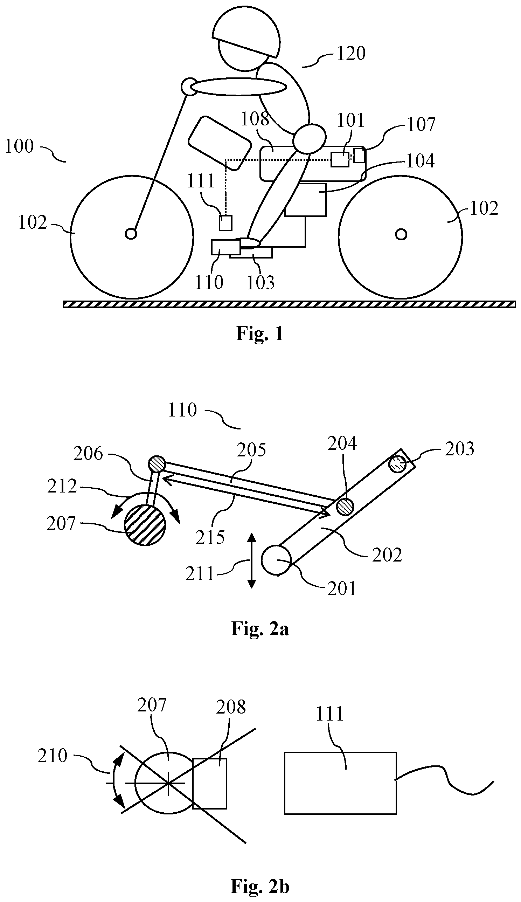

Wie eingangs dargelegt, befasst sich das vorliegende Dokument mit der komfortablen und zuverlässigen Durchführung von Schaltvorgängen mittels eines Fußschalthebels. In diesem Zusammenhang zeigt Fig. 1 ein beispielhaftes (einspuriges) Fahrzeug 100 mit (genau) einem Vorder- und (genau) einem Hinterrad 102. Der Fahrer 120 des Fahrzeugs 100 sitzt auf einer Sitzbank 108 des Fahrzeugs 100. Ein Fuß des Fahrers 120 kann auf einer Fußstütze 103 abgestellt werden, so dass der Fahrer 120 mit der Fußspitze des auf der Fußstütze 103 abgestellten Fußes einen Schalthebel 110 betätigen kann, um den eingestellten Gang des Getriebes 104 des Fahrzeugs 100 zu ändern, insbesondere hoch- bzw. herunterzuschalten.

Fig. 2a zeigt weitere Details eines beispielhaften Schalthebels 110. Der Schalthebel 110 umfasst einen ersten Hebel 202, der um eine erste Drehachse 203 gedreht werden kann. An dem von der ersten Drehachse 203 abgewandten Ende des ersten Hebels 202 ist ein Fußbolzen bzw. ein Stift 201 angeordnet, der mit dem Fuß des Fahrers 120 betätigt werden kann, um den ersten Hebel 202 nach Oben bzw. nach Unten auszulenken (dargestellt durch den Doppelpfeil 211).

Der erste Hebel 202 wirkt über einen Zwischenhebel 205 und einen Wellenhebel 206 auf die Schaltwelle 207 des Getriebes 104 ein. Der Zwischenhebel 205 ist zu diesem Zweck an einem Anbindungspunkt 204 zwischen der ersten Drehachse 203 und dem Fußbolzen 201 an dem ersten Hebel 202 angebunden. Wenn der erste Hebel 202 nach Oben ausgelenkt wird, führt dies zu einer Drehung bzw. zu einem Schaltweg der Schaltwelle 207 in eine erste Drehrichtung. Wenn andererseits der erste Hebel 202 nach Unten ausgelenkt wird, führt dies zu einer Drehung bzw. zu einem Schaltweg der Schaltwelle 207 in eine (entgegengesetzte) zweite Drehrichtung (dargestellt durch den Doppelpfeil 212). Das Ausmaß der Drehung bzw. die Länge des Schaltweges der Schaltwelle 207 hängen dabei von der Länge 215 des Zwischenhebels 205 ab. Alternativ oder ergänzend hängt die Neutrallage des Bolzens 201 von der Länge 215 des Zwischenhebels 205 ab.

Das Fahrzeug 100 kann einen Schaltweg-Sensor 111 umfassen, der eingerichtet ist, Sensordaten in Bezug auf die Länge des Schaltweges des Schaltwelle 207 bei einem Schaltvorgang zu erfassen. Zu diesem Zweck kann, wie in Fig. 2b dargestellt, an der Schaltwelle 207 ein Magnet 208 angeordnet sein (insbesondere fest mit der Schaltwelle 207 verbunden sein), der sich zusammen mit der Schaltwelle 207 bewegt bzw. dreht. Der Schaltweg-Sensor 111 kann einen Hall-Sensor umfassen, der eingerichtet ist, die Feldstärke des von dem Magneten 208 erzeugten Magnetfelds zu erfassen. Basierend auf dem Verlauf der Feldstärke kann dann auf den von der Schaltwelle 207 zurückgelegten Schaltweg 210 geschlossen werden. Der Schaltweg 210 entspricht dabei einem bestimmten Winkelbereich der Drehung der Schaltwelle 207.

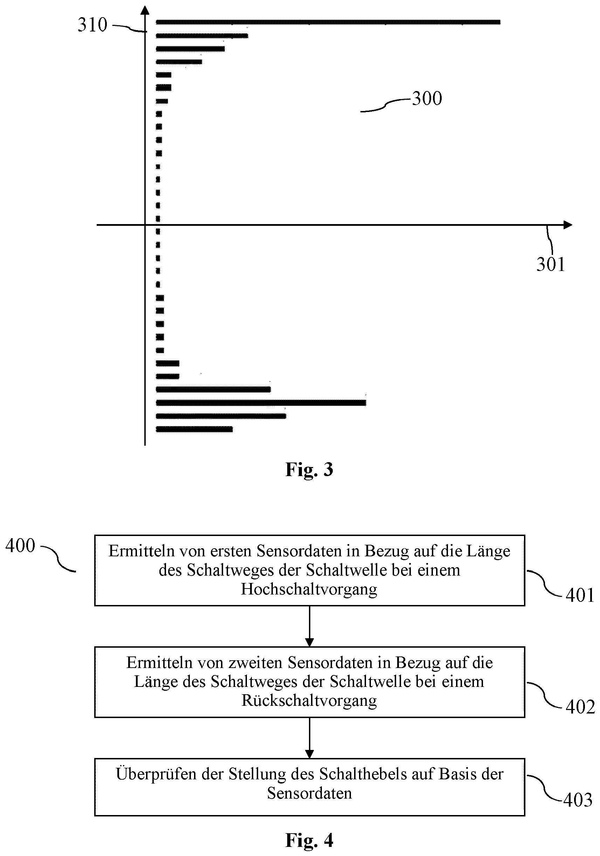

Während des Betriebs des Fahrzeugs 100 kann für eine Vielzahl von Schaltvorgängen eine entsprechende Vielzahl von Werten der Länge des jeweils bewirkten Schaltweges 210 ermittelt werden. Dabei können die Werte der Länge der Schaltwege 210 für Hochschaltvorgänge und für Rückschaltvorgänge ermittelt werden. Basierend auf den ermittelten Längenwerten kann dann eine statistische Auswertung der Schaltweg-Längen durchgeführt werden, wie beispielhaft in Fig. 3 dargestellt.

Fig. 3 zeigt die Häufigkeit 301 der bei einer Vielzahl von Schaltvorgängen erfassten Schaltweg-Längen 310. Dabei kann eine positive Schaltweg-Länge 310 z.B. einem Hochschaltvorgang entsprechen, während eine negative Schaltweg-Länge 310 einem Rückschaltvorgang entsprechen kann. Es kann somit eine statistische Häufigkeitsverteilung 300 der Schaltweg-Längen 310 bei einer Vielzahl von Schaltvorgängen ermittelt werden. Basierend auf der Häufigkeitsverteilung 300 der Schaltweg-Längen 310 kann dann überprüft werden, ob der Schalthebel 110 des Fahrzeugs 100 für den Fahrer korrekt eingestellt ist, um komfortable und/oder zuverlässige Schaltvorgänge für den Fahrer zu ermöglichen.

Wie aus Fig. 3 ersichtlich ist, ist die Häufigkeitsverteilung 300 der Schaltweg-Längen 310 in dem dargestellten Beispiel asymmetrisch. Insbesondere ist die bei Hochschaltvorgängen bewirkte Schaltweg-Länge 310 im Mittel höher als die Schaltweg-Länge 310 bei Rückschaltvorgängen. Da es typischerweise für einen zuverlässigen Schaltvorgang erforderlich ist, dass die bei dem Schaltvorgang bewirkte Schaltweg-Länge 310 (betraglich) eine bestimmte Mindestlänge (d.h. einen Längen-Schwellenwert) erreicht oder überschreitet, weisen in dem in Fig. 3 dargestellten Beispiele Hochschaltvorgänge eine relativ hohe Zuverlässigkeit auf, während Rückschaltvorgänge eine relativ niedrige Zuverlässigkeit aufweisen. Ferner weisen Rückschaltvorgänge vermutlich einen relativ niedrigen Komfort auf, da es für den Fahrer des Fahrzeugs 100 schwierig zu sein scheint, die erforderliche Schaltweg-Länge 310 für einen Rückschaltvorgang zu bewirken.

Eine Auswerte-Vorrichtung 101 des Fahrzeugs 100 kann eingerichtet sein, die für einen Schaltvorgang bewirkte Schaltweg-Länge 310 zu ermitteln (auf Basis der Sensordaten des Schaltweg-Sensors 111) und in einer Speichereinheit 107 zu speichern. Ferner kann die Vorrichtung 101 eingerichtet sein, auf Basis der Schaltweg-Längen 310 für eine Vielzahl von Schaltvorgängen, insbesondere auf Basis einer Häufigkeitsverteilung 300 der Schaltweg-Längen 310, zu überprüfen, ob eine fehlerhafte bzw. eine ungünstige Stellung des Schalthebels 110 vorliegt oder nicht bzw. ob die Stellung des Schalthebels 110 für den Fahrer des Fahrzeugs 100 angepasst werden sollte oder nicht. Ferner kann die Vorrichtung 101 eingerichtet sein, bei Bedarf zu veranlassen, dass eine Änderung der Stellung des Schalthebels 110 vorgenommen wird. Dies kann z.B. durch die Ausgabe eines Hinweises an den Fahrer des Fahrzeugs 100 und/oder an einen Wartungsdienst des Fahrzeugs 100 bewirkt werden.

Die Stellung des Schalthebels 110, insbesondere die Länge 215 des Zwischenhebels 205, kann dann angepasst werden, um zu bewirken, dass Hochschaltvorgänge und Rückschaltvorgänge in komfortabler und zuverlässiger Weise durch den Fahrer durchgeführt werden können. Beispielsweise kann die Stellung des Schalthebels 110 derart verändert werden, dass sich eine symmetrische Häufigkeitsverteilung 300 für die Schaltweg-Längen 310 für Hochschaltvorgänge und Rückschaltvorgänge ergibt.

Die Stellung, insbesondere die Neutrallage, des Schalthebels 110 kann manuell (z.B. durch eine Stellschraube) eingestellt werden. Optional kann das Fahrzeug 100 einen Aktor, insbesondere einen Elektromotor, aufweisen (nicht dargestellt), der eingerichtet ist, automatisch die Stellung, insbesondere die Neutrallage, des Schalthebels 110 zu verändern. Die Stellung des Schalthebels 110 kann dann automatisch in Abhängigkeit von den ermittelten Schaltweg-Längen 310 angepasst werden.

In diesem Dokument wird somit ein Fußschalthebel 110 für ein Motorradgetriebe 104 beschrieben, das es dem Fahrer 120 eines Motorrads 100 ermöglicht, das Getriebe 104 sequentiell mit dem Fuß zu schalten. Für eine Hochschaltung kann der Hebel 110 mit dem Fahrerfuß nach oben, und für eine Rückschaltung nach unten gedrückt werden. Die Bewegung des Hebels 110 wird dabei über ein Gestänge 205, 206 in eine Drehbewegung der Schaltwelle 207 des Getriebes 104 übertragen.

Der Fußschalthebel 110 eines Motorrad 100 weist typischerweise eine Standardstellung, d.h. eine Standard-Neutrallage, auf, die nicht an die Fußgeometrie bzw. den Schuh des jeweiligen Fahrers 120 angepasst ist. Weicht der Fahrerfuß bzw. der Schuh zu sehr von der mit der Standardstellung des Fußschalthebels 110 assoziierten Normallage ab, dann kann der Schaltvorgang beim Hoch- bzw. Rückschalten negativ beeinflusst werden.

Für die Funktion eines Schaltassistenten (SASS) kann auf der Getriebeschaltwelle 207 ein Sensor 111 angebracht werden, der die rotatorische Drehbewegung der Schaltwelle 207 relativ zum Gehäuse des Getriebes 104 bzw. des Motors misst. Der Sensor 111 kann dazu genützt werden, die Schaltwege 210, insbesondere die Schaltweg-Länge 310, zu messen. Zieht oder drückt der Fahrer 120 auf den Schalthebel 110, so wird die Schaltwelle 207 in eine erste Drehrichtung oder in eine zweite Drehrichtung gedreht und der Sensor 111 misst den Verdrehwinkel (und damit die Schaltweg-Länge 310) an der Schaltwelle 207. Sowohl bei einer Hoch- als auch bei einer Rückschaltung kann damit der Schaltweg 210 bis zu der jeweiligen Endlage der Schaltwelle 207 bei dem jeweiligen Schaltvorgang ermittelt werden. Differieren die Endlagen der Schaltvorgänge in eine Richtung gegenüber den Endlagen der Schaltvorgänge in der anderen Richtung, dann kann davon ausgegangen werden, dass die Position des Schalthebels 110 für den Fahrer nicht optimal ist. Die Häufigkeit von Fehlschaltungen kann dann zunehmen. Eine Korrektur der Stellung des Schalthebels 110 kann z.B. über eine Justierschraube ermöglicht werden.

Die Sensordaten in Bezug auf die Schaltweg-Länge 310 können gespeichert und für eine Vielzahl von Schaltvorgängen ausgewertet werden. Basierend auf dieser Information kann dann eine optimierte Ziel-Stellung des Schalthebels 110 für den Fahrer 120 des Fahrzeugs 100 ermittelt und vorgeschlagen und/oder ggf. automatisch eingestellt werden.

Fig. 4 zeigt ein Ablaufdiagramm eines beispielhaften (ggf. Computerimplementierten) Verfahrens 400 zur Überprüfung der Stellung eines Schalthebels 110, insbesondere eines Fußschalthebels, für ein Getriebe 104 eines Fahrzeugs 100, insbesondere eines Motorrads. Das Verfahren 400 umfasst das Ermitteln 401 von ersten Sensordaten in Bezug auf die Länge 310 des Schaltweges 210 der Schaltwelle 207 des Getriebes 104 bei zumindest einem Hochschaltvorgang, der durch Auslenkung des Schalthebels 110 durch den Fahrer des Fahrzeugs 100 in eine erste Richtung (z.B. durch eine Auslenkung nach Oben) bewirkt wird. Insbesondere können erste Sensordaten für eine Vielzahl von Hochschaltvorgängen ermittelt werden, die jeweils von dem Fahrer durch Auslenkung des Schalthebels 110 in die erste Richtung bewirkt wurden. Es können somit erste Sensordaten ermittelt werden, die eine statistische Verteilung der Längen 310 der Schaltwege 210 der Schaltwelle 207 bei Hochschaltvorgängen anzeigen, die durch den Fahrer des Fahrzeugs 100 bewirkt werden.

Des Weiteren umfasst das Verfahren 400 das Ermitteln 402 von zweiten Sensordaten in Bezug auf die Länge 310 des Schaltweges 210 der Schaltwelle 207 des Getriebes 104 bei zumindest einem Rückschaltvorgang, der durch Auslenkung des Schalthebels 110 durch den Fahrer in eine zweite Richtung (die entgegengesetzt zu der ersten Richtung ist) bewirkt wird. Insbesondere können zweite Sensordaten für eine Vielzahl von Rückschaltvorgängen ermittelt werden, die jeweils von dem Fahrer durch Auslenkung des Schalthebels 110 in die zweite Richtung bewirkt wurden. Es können somit zweite Sensordaten ermittelt werden, die eine statistische Verteilung der Längen 310 der Schaltwege 210 der Schaltwelle 207 bei Rückschaltvorgängen anzeigen, die durch den Fahrer des Fahrzeugs 100 bewirkt werden.

Das Verfahren 400 umfasst ferner das Überprüfen 403 der Stellung des Schalthebels 110, insbesondere das Überprüfen der Eignung der Stellung des Schalthebels 110 für den Fahrer, auf Basis der ersten Sensordaten und auf Basis der zweiten Sensordaten. Es kann z.B. überprüft werden, ob es die Stellung dem Fahrer des Fahrzeugs 100 ermöglicht, in komfortabler Weise sowohl Hochschaltvorgänge als auch Rückschaltvorgänge durchzuführen. Zu diesem Zweck kann z.B. überprüft werden, ob die Längen 310 des Schaltweges 210 (im mittel) ausreichend hoch sind, um sowohl Hochschaltvorgänge als auch Rückschaltvorgänge durchzuführen.

Durch die in diesem Dokument beschriebenen Maßnahmen können der Komfort und die Zuverlässigkeit von Schaltvorgängen mit einem Fußschalthebel erhöht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen, wobei die vorliegende Erfindung durch nachfolgenden Ansprüche bestimmt wird.

## Patentansprüche

1. Vorrichtung (101) zur Überprüfung und zur Anpassung der Stellung eines Schalthebels (110) für ein Getriebe (104) eines Fahrzeugs (100); wobei der Schalthebel (110) ausgebildet ist, mit einem Fuß eines Fahrers des Fahrzeugs (100) in eine erste Richtung oder in eine entgegengesetzte zweite Richtung ausgelenkt zu werden; wobei die Vorrichtung (101) eingerichtet ist,
- erste Sensordaten in Bezug auf eine Länge (310) eines Schaltweges (210) einer Schaltwelle (207) des Getriebes (104) bei zumindest einem Hochschaltvorgang zu ermitteln, der durch Auslenkung des Schalthebels (110) durch den Fahrer des Fahrzeugs (100) in die erste Richtung bewirkt wird;
- zweite Sensordaten in Bezug auf die Länge (310) des Schaltweges (210) der Schaltwelle (207) des Getriebes (104) bei zumindest einem Rückschaltvorgang zu ermitteln, der durch Auslenkung des Schalthebels (110) durch den Fahrer in die zweite Richtung bewirkt wird;
- die Stellung des Schalthebels (110), insbesondere eine Eignung der Stellung des Schalthebels (110) für den Fahrer, auf Basis der ersten Sensordaten und auf Basis der zweiten Sensordaten zu überprüfen; und
- in Abhängigkeit von den ersten Sensordaten und den zweiten Sensordaten zu veranlassen, dass die Stellung des Schalthebels (110) angepasst wird; wobei die Stellung des Schalthebels (110) eine Neutralstellung ist; wobei das Anpassen der Stellung des Schalthebels (110) umfasst
- ein Verschieben der Neutralstellung des Schalthebels (110) in die erste Richtung, um die durch den Fahrer bewirkte Länge (310) des Schaltweges (210) der Schaltwelle (207) des Getriebes (104) für einen Hochschaltvorgang zu verkürzen und für einen Rückschaltvorgang zu verlängern; oder
- ein Verschieben der Neutralstellung des Schalthebels (110) in die zweite Richtung, um die durch den Fahrer bewirkte Länge des Schaltweges (210) der Schaltwelle (207) des Getriebes (104) für einen Hochschaltvorgang zu verlängern und für einen Rückschaltvorgang zu verkürzen.

2. Vorrichtung (101) gemäß Anspruch 1, wobei die Vorrichtung (101) eingerichtet ist, in Abhängigkeit von den ersten Sensordaten und den zweiten Sensordaten zu veranlassen, dass die Stellung des Schalthebels (110) angepasst wird,
- durch Ausgabe eines Hinweises an den Fahrer des Fahrzeugs (100); und/oder
- durch Eintrag eines Hinweises in einen Fehlerspeicher des Fahrzeugs (100); und/oder
- durch Ansteuern eines Aktors des Fahrzeugs (100), der eingerichtet ist, die Stellung des Schalthebels (110) automatisch zu verändern.

3. Vorrichtung (101) gemäß einem der vorhergehenden Ansprüche, wobei die Vorrichtung (101) eingerichtet ist,
- erste Sensordaten für eine Vielzahl von Hochschaltvorgängen und zweite Sensordaten für eine Vielzahl von Rückschaltvorgängen zu ermitteln,
- auf Basis der ersten Sensordaten und auf Basis der zweiten Sensordaten eine statistische Auswertung, insbesondere eine Häufigkeitsverteilung (300), der Länge (310) des Schaltweges (210) der Schaltwelle (207) des Getriebes (104) bei der Vielzahl von Hochschaltvorgängen und der Vielzahl von Rückschaltvorgängen zu ermitteln, und
- die Stellung des Schalthebels (110) auf Basis der statistischen Auswertung, insbesondere auf Basis der Häufigkeitsverteilung (300), zu überprüfen.

4. Vorrichtung (101) gemäß Anspruch 3, wobei die Vorrichtung (101) eingerichtet ist,
- auf Basis der ersten Sensordaten eine minimale, eine mittlere und/oder eine maximale erste Länge (310) des Schaltweges (210) bei der Vielzahl von Hochschaltvorgängen zu ermitteln;
- auf Basis der zweite Sensordaten eine minimale, eine mittlere und/oder eine maximale zweite Länge (310) des Schaltweges (210) bei der Vielzahl von Rückschaltvorgängen zu ermitteln; und
- die minimale, mittlere und/oder maximale erste Länge (310) des Schaltweges (210) mit der minimalen, mittleren und/oder maximalen zweiten Länge (310) des Schaltweges (210) zu vergleichen, um die Stellung des Schalthebels (110) zu überprüfen.

5. Vorrichtung (101) gemäß Anspruch 4, wobei die Vorrichtung (101) eingerichtet ist,
- die minimale, mittlere und/oder maximale erste Länge (310) des Schaltweges (210) mit einem Längen-Schwellenwert zu vergleichen; wobei der Längen-Schwellenwert von einer Länge (310) des Schaltweges (210) der Schaltwelle (207) des Getriebes (104) abhängt, die für einen erfolgreichen Schaltvorgang mindestens erforderlich ist;
- die minimale, mittlere und/oder maximale zweite Länge (310) des Schaltweges (210) mit dem Längen-Schwellenwert zu vergleichen; und
- die Stellung des Schalthebels (110) auf Basis der Vergleiche zu überprüfen.

6. Vorrichtung (101) gemäß einem der vorhergehenden Ansprüche, wobei die Vorrichtung (101) eingerichtet ist,
- auf Basis der ersten Sensordaten und auf Basis der zweiten Sensordaten eine Ziel-Stellung des Schalthebels (110) zu ermitteln; und
- zu veranlassen, dass die Stellung des Schalthebels (110) in Abhängigkeit von der ermittelten Ziel-Stellung angepasst wird.

7. Vorrichtung (101) gemäß Anspruch 6, mit Rückbezug auf einen der Ansprüche 3 bis 5, wobei die Vorrichtung (101) eingerichtet ist, die Ziel-Stellung zu ermitteln, um zu bewirken, dass für eine Vielzahl von zukünftigen Schaltvorgängen
- eine für die Vielzahl von zukünftigen Schaltvorgängen ermittelte Häufigkeitsverteilung (300) einen höheren Grad an Symmetrie aufweist als die auf Basis der ersten und zweiten Sensordaten ermittelte Häufigkeitsverteilung (300); und/oder
- eine Abweichung der mittleren zweiten Länge (310) von der mittleren ersten Länge (310), die für die Vielzahl von zukünftigen Schaltvorgängen ermittelt werden, geringer ist als eine Abweichung der mittleren zweiten Länge (310) von der mittleren ersten Länge (310), die auf Basis der ersten und zweiten Sensordaten ermittelt wurden.

8. Fahrzeug (100) das umfasst, - ein Getriebe (104);- einen Schalthebel (110) für das Getriebe (104), wobei der Schalthebel (110) ausgebildet ist, mit einem Fuß eines Fahrers des Fahrzeugs (100) in eine erste Richtung oder in eine entgegengesetzte zweite Richtung ausgelenkt zu werden; und - eine Vorrichtung (101) gemäß einer der vorhergehenden Ansprüche

9. Fahrzeug (100) gemäß Anspruch 8, das ferner eine Schaltwelle (207) des Getriebes umfasst,
wobei
- die Schaltwelle (207) einen Magneten (208) aufweist, der ausgebildet ist, sich zusammen mit der Schaltwelle (207) um eine Drehachse der Schaltwelle (207) zu drehen, und
- die Vorrichtung (101) eingerichtet ist, die ersten und die zweiten Sensordaten mittels eines Sensors (111), insbesondere mittels eines Hall-Sensors, zu ermitteln, der eingerichtet ist, Sensordaten in Bezug auf ein von dem Magneten (208) bewirktes Magnetfeld zu erfassen.

10. Fahrzeug (100) gemäß Anspruch 9, wobei der Schalthebel (110) ausgebildet ist, insbesondere über ein Gestänge, eine Auslenkung des Schalthebels (110) in die erste Richtung in eine Drehung der Schaltwelle (207) des Getriebes (204) in eine erste Drehrichtung zu übertragen, und/oder eine Auslenkung des Schalthebels (110) in die entgegengesetzte zweite Richtung in eine Drehung der Schaltwelle (207) des Getriebes (204) in eine entgegengesetzte zweite Drehrichtung zu übertragen.

11. Verfahren (400) zur Überprüfung und zur Anpassung der Stellung eines Schalthebels (110) für ein Getriebe (104) eines Fahrzeugs (100); wobei der Schalthebel (110) ausgebildet ist, mit einem Fuß eines Fahrers des Fahrzeugs (100) in eine erste Richtung oder in eine entgegengesetzte zweite Richtung ausgelenkt zu werden; wobei das Verfahren (400) umfasst,
- Ermitteln (401) von ersten Sensordaten in Bezug auf eine Länge (310) eines Schaltweges (210) einer Schaltwelle (207) des Getriebes (104) bei zumindest einem Hochschaltvorgang, der durch Auslenkung des Schalthebels (110) durch den Fahrer des Fahrzeugs (100) in die erste Richtung bewirkt wird;
- Ermitteln (402) von zweiten Sensordaten in Bezug auf die Länge (310) des Schaltweges (210) der Schaltwelle (207) des Getriebes (104) bei zumindest einem Rückschaltvorgang, der durch Auslenkung des Schalthebels (110) durch den Fahrer in die zweite Richtung bewirkt wird;
- Überprüfen (403) der Stellung des Schalthebels (110), insbesondere eine Eignung der Stellung des Schalthebels (110) für den Fahrer, auf Basis der ersten Sensordaten und auf Basis der zweiten Sensordaten; und
- Veranlassen, in Abhängigkeit von den ersten Sensordaten und den zweiten Sensordaten, dass die Stellung des Schalthebels (110) angepasst wird; wobei die Stellung des Schalthebels (110) eine Neutralstellung ist; wobei das Anpassen der Stellung des Schalthebels (110) umfasst
- ein Verschieben der Neutralstellung des Schalthebels (110) in die erste Richtung, um die durch den Fahrer bewirkte Länge (310) des Schaltweges (210) der Schaltwelle (207) des Getriebes (104) für einen Hochschaltvorgang zu verkürzen und für einen Rückschaltvorgang zu verlängern; oder
- ein Verschieben der Neutralstellung des Schalthebels (110) in die zweite Richtung, um die durch den Fahrer bewirkte Länge des Schaltweges (210) der Schaltwelle (207) des Getriebes (104) für einen Hochschaltvorgang zu verlängern und für einen Rückschaltvorgang zu verkürzen.

## Claims

1. Apparatus (101) for checking and for adapting the position of a shift lever (110) for a transmission (104) of a vehicle (100); wherein the shift lever (110) is configured to be deflected in a first direction or in an opposite second direction by a foot of a driver of the vehicle (100); wherein the apparatus (101) is configured
- to ascertain first sensor data in relation to a length (310) of a shift travel (210) of a shift shaft (207) of the transmission (104) during at least one upshift process effected by deflection of the shift lever (110) by the driver of the vehicle (100) in the first direction;
- to ascertain second sensor data in relation to the length (310) of the shift travel (210) of the shift shaft (207) of the transmission (104) during at least one downshift process effected by deflection of the shift lever (110) by the driver in the second direction;
- to check the position of the shift lever (110), in particular suitability of the position of the shift lever (110) for the driver, on the basis of the first sensor data and on the basis of the second sensor data; and
- to instigate adaptation of the position of the shift lever (110) according to the first sensor data and the second sensor data; wherein the position of the shift lever (110) is a neutral position; wherein the adaptation of the position of the shift lever (110) comprises
- displacement of the neutral position of the shift lever (110) in the first direction in order for the length (310) of the shift travel (210) of the shift shaft (207) of the transmission (104) effected by the driver to be shortened for an upshift process and to be lengthened for a downshift process; or
- displacement of the neutral position of the shift lever (110) in the second direction in order for the length of the shift travel (210) of the shift shaft (207) of the transmission (104) effected by the driver to be lengthened for an upshift process and to be shortened for a downshift process.

2. Apparatus (101) according to Claim 1, wherein the apparatus (101) is configured to instigate adaptation of the position of the shift lever (110), according to the first sensor data and the second sensor data,
- by way of output of a piece of information to the driver of the vehicle (100); and/or
- by way of entry of a piece of information into an error memory of the vehicle (100); and/or
- by way of activation of an actuator of the vehicle (100), which is configured to automatically change the position of the shift lever (110).

3. Apparatus (101) according to either of the preceding claims, wherein the apparatus (101) is configured
- to ascertain first sensor data for a multiplicity of upshift processes and second sensor data for a multiplicity of downshift processes;
- to ascertain, on the basis of the first sensor data and on the basis of the second sensor data, a statistical evaluation, in particular a frequency distribution (300), of the length (310) of the shift travel (210) of the shift shaft (207) of the transmission (104) for the multiplicity of upshift processes and for the multiplicity of downshift processes; and
- to check the position of the shift lever (110) on the basis of the statistical evaluation, in particular on the basis of the frequency distribution (300).

4. Apparatus (101) according to Claim 3, wherein the apparatus (101) is configured
- to ascertain, on the basis of the first sensor data, a minimum, an average and/or a maximum first length (310) of the shift travel (210) for the multiplicity of upshift processes;
- to ascertain, on the basis of the second sensor data, a minimum, an average and/or a maximum second length (310) of the shift travel (210) for the multiplicity of downshift processes; and
- to compare the minimum, average and/or maximum first length (310) of the shift travel (210) with the minimum, average and/or maximum second length (310) of the shift travel (210) in order to check the position of the shift lever (110).

5. Apparatus (101) according to Claim 4, wherein the apparatus (101) is configured
- to compare the minimum, average and/or maximum first length (310) of the shift travel (210) with a length threshold value; wherein the length threshold value depends on a length (310) of the shift travel (210) of the shift shaft (207) of the transmission (104) that is a minimum requirement for a successful shift process;
- to compare the minimum, average and/or maximum second length (310) of the shift travel (210) with the length threshold value; and
- to check the position of the shift lever (110) on the basis of the comparisons.

6. Apparatus (101) according to one of the preceding claims, wherein the apparatus (101) is configured
- to ascertain, on the basis of the first sensor data and on the basis of the second sensor data, a target position of the shift lever (110); and
- to instigate adaptation of the position of the shift lever (110) according to the ascertained target position.

7. Apparatus (101) according to Claim 6, when referred back to one of Claims 3 to 5, wherein the apparatus (101) is configured to ascertain the target position for effecting, for a multiplicity of future shift processes,
- a greater degree of symmetry of a frequency distribution (300) ascertained for the multiplicity of future shift processes than the frequency distribution (300) ascertained on the basis of the first sensor data and second sensor data; and/or
- a smaller difference between the average second length (310) and the average first length (310) ascertained for the multiplicity of future shift processes than between the average second length (310) and the average first length (310) ascertained on the basis of the first sensor data and the second sensor data.

8. Vehicle (100) comprising - a transmission (104); - a shift lever (110) for the transmission (104), wherein the shift lever (110) is configured to be deflected in a first direction or in an opposite second direction by a foot of a driver of the vehicle (100); and - an apparatus (101) according to one of the preceding claims.

9. Vehicle (100) according to Claim 8, further comprising a shift shaft (207) of the transmission, wherein
- the shift shaft (207) has a magnet (208) which is configured to rotate together with the shift shaft (207) about an axis of rotation of the shift shaft (207); and
- the apparatus (101) is configured to ascertain the first sensor data and the second sensor data by means of a sensor (111), in particular by means of a Hall sensor, which is configured to detect sensor data in relation to a magnetic field generated by the magnet (208).

10. Vehicle (100) according to Claim 9, wherein the shift lever (110) is configured to convert a deflection of the shift lever (110) in the first direction into a rotation of the shift shaft (207) of the transmission (204) in a first direction of rotation, and/or to convert a deflection of the shift lever (110) in the opposite second direction into a rotation of the shift shaft (207) of the transmission (204) in an opposite second direction of rotation, in particular via a linkage.

11. Method (400) for checking and for adapting the position of a shift lever (110) for a transmission (104) of a vehicle (100); wherein the shift lever (110) is configured to be deflected in a first direction or in an opposite second direction by a foot of a driver of the vehicle (100); wherein the method (400) comprises
- ascertaining (401) first sensor data in relation to a length (310) of a shift travel (210) of a shift shaft (207) of the transmission (104) during at least one upshift process effected by deflection of the shift lever (110) by the driver of the vehicle (100) in the first direction;
- ascertaining (402) second sensor data in relation to the length (310) of the shift travel (210) of the shift shaft (207) of the transmission (104) during at least one downshift process effected by deflection of the shift lever (110) by the driver in the second direction;
- checking (403) the position of the shift lever (110), in particular suitability of the position of the shift lever (110) for the driver, on the basis of the first sensor data and on the basis of the second sensor data; and
- instigating adaptation of the position of the shift lever (110) according to the first sensor data and the second sensor data; wherein the position of the shift lever (110) is a neutral position; wherein the adaptation of the position of the shift lever (110) comprises
- displacement of the neutral position of the shift lever (110) in the first direction in order for the length (310) of the shift travel (210) of the shift shaft (207) of the transmission (104) effected by the driver to be shortened for an upshift process and to be lengthened for a downshift process; or
- displacement of the neutral position of the shift lever (110) in the second direction in order for the length of the shift travel (210) of the shift shaft (207) of the transmission (104) effected by the driver to be lengthened for an upshift process and to be shortened for a downshift process.

## Revendications

1. Dispositif (101) de contrôle et d'adaptation de la position d'un levier (110) de changement de vitesses pour une boîte de vitesse (104) d'un véhicule (100) ; le levier (110) de changement de vitesses est conçu pour être dévié par un pied d'un conducteur du véhicule (100) dans une première direction ou dans une deuxième direction opposée ; le dispositif (101) est conçu de façon à
- déterminer des premières données de capteur relatives à une longueur (310) d'une course (210) de changement de vitesses d'un arbre (207) de changement de vitesses de la boîte de vitesse (104) lors d'au moins un passage de rapport supérieur, qui est provoqué par la déviation du levier (110) de changement de vitesses par le conducteur du véhicule (100) dans la première direction ;
- déterminer des deuxièmes données de capteur relatives à la longueur (310) de la course (210) de changement de vitesses de l'arbre (207) de changement de vitesses de la boîte de vitesse (104) lors d'au moins un processus de passage de rapport inférieur qui est provoqué par la déviation du levier (110) de changement de vitesses par le conducteur dans la deuxième direction ;
- contrôler la position du levier (110) de changement de vitesse, en particulier une adéquation de la position du levier (110) de changement de vitesses pour le conducteur, sur la base des premières données de capteur et sur la base des deuxièmes données de capteur ; et
- en fonction des premières données de capteur et des deuxièmes données de capteur, faire en sorte que la position du levier (110) de changement de vitesses soit adaptée ; la position du levier (110) de changement de vitesses est une position de point mort ; l'adaptation de la position du levier (110) de changement de vitesses comprend
- un déplacement de la position de point mort du levier (110) de changement de vitesses dans la première direction afin de raccourcir la longueur (310) de la course (210) de changement de vitesses de l'arbre (207) de changement de vitesses de la boîte de vitesse (104) provoquée par le conducteur pour un passage de rapport supérieur et de l'allonger pour un passage de rapport inférieur ; ou
- un déplacement de la position de point mort du levier (110) de changement de vitesses dans la deuxième direction afin d'étendre la longueur de la course (210) de changement de vitesses de l'arbre (207) de changement de vitesses de la boîte de vitesse (104) provoquée par le conducteur pour un passage de rapport supérieur et de la raccourcir pour un passage de rapport inférieur.

2. Dispositif (101) selon la revendication 1, dans lequel le dispositif (101) est agencé pour faire en sorte que la position du levier de vitesses (110) soit adaptée en fonction des premières données de capteur et des deuxièmes données de capteur,
- en émettant une indication au conducteur du véhicule (100) ; et/ou
- en enregistrant une indication dans une mémoire d'erreurs du véhicule (100) ; et/ou
- en commandant un actionneur du véhicule (100) qui est conçu pour modifier automatiquement la position du levier de vitesses (110).

3. Dispositif (101) selon l'une des revendications précédentes, le dispositif (101) étant agencé de façon à
- déterminer des premières données de capteur pour une pluralité d'opérations de passage de rapport supérieur et des deuxièmes données de capteur pour une pluralité d'opérations de passage de rapport inférieur ;
- déterminer, sur la base des premières données de capteur et sur la base des deuxièmes données de capteur, une évaluation statistique, en particulier une distribution de fréquence (300), de la longueur (310) de la course (210) de changement de vitesses de l'arbre (207) de changement de vitesses de la boîte de vitesse (104) pour la pluralité d'opérations de passage de rapport supérieur et la pluralité d'opérations de passage de rapport inférieur ; et
- contrôler la position du levier (110) de changement de vitesses sur la base de l'évaluation statistique, en particulier sur la base de la distribution de fréquence (300) .

4. Dispositif (101) selon la revendication 3, dans lequel le dispositif (101) est agencé de façon à
- déterminer, sur la base des premières données de capteur, une première longueur (310) minimale, moyenne et/ou maximale de la course (210) de changement de vitesses lors de la pluralité de passages de rapport supérieur ;
- déterminer, sur la base des deuxièmes données de capteur, une deuxième longueur minimale, moyenne et/ou maximale (310) de la course (210) de changement de vitesses lors de la pluralité d'opérations de passage de rapport inférieur ; et
- comparer la première longueur minimale, moyenne et/ou maximale (310) de la course (210) de changement de vitesses avec la deuxième longueur minimale, moyenne et/ou maximale (310) de la course (210) de changement de vitesse, afin de contrôler la position du levier (110) de changement de vitesse.

5. Dispositif (101) selon la revendication 4, dans lequel le dispositif (101) est agencé de façon à
- comparer la première longueur (310) minimale, moyenne et/ou maximale de la course (210) de changement de vitesses à une valeur seuil de longueur ; la valeur seuil de longueur dépend d'une longueur (310) de la course (210) de changement de vitesses de l'arbre (207) de changement de vitesses de la boîte de vitesse (104) qui est au moins nécessaire pour un changement de vitesse réussi ;
- comparer la deuxième longueur minimale, moyenne et/ou maximale (310) de la course (210) de changement de vitesses avec la valeur seuil de longueur ; et
- contrôler la position du levier (110) de changement de vitesses sur la base des comparaisons.

6. Dispositif (101) selon l'une quelconque des revendications précédentes, le dispositif (101) étant agencé de façon à
- déterminer une position cible du levier de vitesses (110) sur la base des premières données de capteur et sur la base des deuxièmes données de capteur ; et
- faire en sorte que la position du levier (110) de changement de vitesses soit adaptée en fonction de la position cible déterminée.

7. Dispositif (101) selon la revendication 6, en tant qu'elle dépend de l'une des revendications 3 à 5, le dispositif (101) étant agencé de façon à déterminer la position cible afin de faire en sorte que, pour une pluralité d'opérations de changement de vitesses futures,
- une distribution de fréquence (300) déterminée pour la pluralité d'opérations de changement de vitesses futures présente un degré de symétrie plus élevé que la distribution de fréquence (300) déterminée sur la base des premières et deuxièmes données de capteur ; et/ou
- un écart de la deuxième longueur moyenne (310) par rapport à la première longueur moyenne (310) déterminée pour la pluralité de changement de vitesses futures est inférieur à un écart de la deuxième longueur moyenne (310) par rapport à la première longueur moyenne (310) déterminée sur la base des première et deuxième données de capteur.

8. Véhicule (100) comprenant : - une boîte de vitesse (104) ; - un levier de vitesses (110) pour la boîte de vitesse (104), le levier de vitesses (110) étant configuré pour être dévié par un pied d'un conducteur du véhicule (100) dans une première direction ou dans une deuxième direction opposée ; et - un dispositif (101) selon l'une quelconque des revendications précédentes.

9. Véhicule (100) selon la revendication 8, comprenant en outre un arbre (207) de changement de vitesses de la boîte de vitesse, dans lequel
- l'arbre (207) de changement de vitesses comprend un aimant (208) configuré pour tourner avec l'arbre (207) de changement de vitesses autour d'un axe de rotation de l'arbre (207) de changement de vitesses, et
- le dispositif (101) est conçu pour déterminer les premières et les deuxièmes données de capteur au moyen d'un capteur (111), en particulier au moyen d'un capteur à effet Hall, qui est conçu pour détecter des données de capteur par rapport à un champ magnétique généré par l'aimant (208).

10. Véhicule (100) selon la revendication 9, dans lequel le levier (110) de changement de vitesses est conçu, notamment par l'intermédiaire d'une tringlerie, de façon à transmettre une déviation du levier (110) de changement de vitesses dans la première direction en une rotation de l'arbre (207) de changement de vitesses de la boîte de vitesse (204) dans un premier sens de rotation, et/ou pour transmettre une déviation du levier (110) de changement de vitesses dans la deuxième direction opposée en une rotation de l'arbre (207) de changement de vitesses de la boîte de vitesse (204) dans un deuxième sens de rotation opposé.

11. Procédé (400) de contrôle et d'adaptation de la position d'un levier (110) de changement de vitesses pour une transmission (104) d'un véhicule (100) ; le levier (110) de changement de vitesses étant adapté pour être dévié par un pied d'un conducteur du véhicule (100) dans une première direction ou dans une deuxième direction opposée ; le procédé (400) comprend
- le fait (401) de déterminer des premières données de capteur relatives à une longueur (310) d'une course (210) de changement de vitesses d'un arbre (207) de changement de vitesses de la boîte de vitesse (104) lors d'au moins un passage de rapport supérieur qui est provoqué par la déviation du levier (110) de changement de vitesses par le conducteur du véhicule (100) dans la première direction ;
- le fait (402) de déterminer des deuxièmes données de capteur relatives à la longueur (310) de la course (210) de changement de vitesses de l'arbre (207) de changement de vitesses de la boîte de vitesse (104) lors d'au moins une opération de passage de rapport inférieur qui est provoquée par la déviation du levier (110) de changement de vitesses par le conducteur dans la deuxième direction ;
- le fait (403) de contrôler la position du levier (110) de changement de vitesse, en particulier une adéquation de la position du levier (110) de changement de vitesses pour le conducteur, sur la base des premières données de capteur et sur la base des deuxièmes données de capteur ; et
- le fait, en fonction des premières données de capteur et des deuxièmes données de capteur, de faire en sorte que la position du levier (110) de changement de vitesses soit adaptée ; la position du levier (110) de changement de vitesses étant une position de point mort ; l'adaptation de la position du levier (110) de changement de vitesses comprend
- un déplacement de la position de point mort du levier (110) de changement de vitesses dans la première direction afin de raccourcir la longueur (310) de la course (210) de changement de vitesses de l'arbre (207) de changement de vitesses de la boîte de vitesse (104) provoquée par le conducteur pour un passage de rapport supérieur et de l'allonger pour un passage de rapport inférieur ; ou
- un déplacement de la position de point mort du levier (110) de changement de vitesses dans la deuxième direction afin d'étendre la longueur de la course (210) de changement de vitesses de l'arbre (207) de changement de vitesses de la boîte de vitesse (104) provoquée par le conducteur pour un passage de rapport supérieur et de la raccourcir pour un passage de rapport inférieur.
